# FASCICULE DE BREVET EUROPEEN

(11) **EP 3 365 708 B1**
(45) Date de publication et mention de la délivrance du brevet: **01.04.2020**
(21) Numéro de dépôt: 16782259.2
(22) Date de dépôt: 18.10.2016
(51) Int. Cl.: G01T 3/06, G01T 3/08

(54) **SYSTEME DE DETECTION DE NEUTRONS ET PROCEDE DE DETECTION ASSOCIE**
SYSTEM ZUR DETEKTION VON NEUTRONEN UND ZUGEHÖRIGES DETEKTIONSVERFAHREN
SYSTEM FOR DETECTING NEUTRONS AND ASSOCIATED DETECTION METHOD

(30) Priorité: 20.10.2015 FR 1560002
(43) Date de publication de la demande: 29.08.2018
(73) Titulaire: Commissariat à l'Energie Atomique et aux Energies Alternatives, 75015 Paris (FR)
(72) Inventeur: DUMAZERT, Jonathan, 30100 Ales (FR); COULON, Romain, 58400 Chaulgnes (FR); KONDRASOVS, Vladimir, 91120 Palaiseau (FR)
(74) Mandataire: Brevalex
(86) Numéro de dépôt international: PCT/EP2016/074995
(87) Numéro de publication internationale: WO 2017/067938

(56) Documents cités:
- WO-A1-2005/008287
- US-A1- 2012 043 469
- US-A1- 2014 124 659
- TAKAHIKO AOYAMA ET AL: "A neutron detector using silicon PIN photodiodes for personal neutron dosimetry", NUCLEAR INSTRUMENTS & METHODS IN PHYSICS RESEARCH. SECTION A: ACCELERATORS, SPECTROMETERS, DETECTORS, AND ASSOCIATED EQUIPMENT, vol. 314, no. 3, 1 mai 1992 (1992-05-01), pages 590-594, XP055120342, NL ISSN: 0168-9002, DOI: 10.1016/0168-9002(92)90253-Z cité dans la demande

## Description

### DOMAINE TECHNIQUE

La présente invention concerne un système de détection de neutrons comportant un détecteur principal et un détecteur auxiliaire,
le détecteur principal et le détecteur auxiliaire comportant chacun un volume sensible,
le détecteur principal étant propre à délivrer un premier signal de détection représentatif d'une interaction de son volume sensible avec des photons et/ou des électrons, le détecteur auxiliaire étant propre à délivrer un deuxième signal de détection représentatif d'une interaction de son volume sensible avec des photons et/ou des électrons,
le détecteur principal comprenant, en outre, un écran de conversion principal réalisé dans un premier matériau s'étendant en regard d'une surface d'entrée du volume sensible du détecteur principal,
le détecteur auxiliaire comprenant, en outre, un écran de conversion auxiliaire réalisé dans un deuxième matériau s'étendant en regard d'une surface d'entrée du volume sensible du détecteur auxiliaire,
le système de détection comprenant en outre une chaîne de traitement configurée pour générer une information de comptage de neutrons en fonction du résultat de la différence entre une transformée du premier signal de détection et une transformée du deuxième signal de détection.

L'invention s'applique au domaine de la mesure nucléaire, plus spécifiquement au domaine de la détection et du comptage neutroniques.

### ÉTAT DE LA TECHNIQUE ANTÉRIEURE

Il est connu d'avoir recours à des systèmes de détection de neutrons. De tels systèmes sont généralement dédiés au comptage neutronique en vue de répondre à des enjeux industriels, de sûreté et de sécurité tels que :
- le suivi opérationnel du débit de dose neutronique en radioprotection nucléaire, par exemple en alternative à des systèmes classiques à hélium-3, aussi bien sur des sites de production d'énergie ou de démantèlement que dans un cadre médical radiothérapeutique ; ou
- la détection de matière radiologique (par exemple pour la détection d'une menace de type « bombe sale », ou encore dans le cadre de la lutte contre la prolifération d'armements nucléaires), par exemple dans le cas où de tels systèmes de détection de neutrons sont implémentés dans des balises de sécurité installées aux frontières ou dans des lieux publics, ainsi que dans des instruments utilisés dans le cadre de la gestion de crise nucléaire et/ou radiologique.

Le document « A neutron detector using silicon PIN photodiodes for personal neutron dosimetry », Aoyama et al., reçu le 19 août 1991 par Nuclear Instruments and Methods in Physics Research A*,* décrit un système de détection de neutrons. Un tel système de détection comporte un premier détecteur comprenant un écran en gadolinium, et un deuxième détecteur comportant un écran en étain. Un tel système de détection est en outre configuré pour délivrer un signal qui est fonction de signaux issus du premier détecteur et du deuxième détecteur.

Néanmoins, un tel système de détection ne donne pas entière satisfaction.

En effet, dans un tel système de détection, seule une faible partie de la signature spectrale associée aux électrons de conversion générés par l'absorption de neutrons, en particulier de neutrons thermiques, est exploitée dans le cadre de la détection, ce qui limite la sensibilité de détection du système de détection.

En outre, un tel système de détection requiert une résolution spectrale de l'ordre de 10 keV, ce qui est une résolution élevée dans ce type d'application. Ceci implique le recours à des composants présentant un coût important, tels que des photodétecteurs à semi-conducteurs. De tels photodétecteurs sont, en outre, peu modulables en taille et géométrie.

Un but de l'invention est donc de proposer un système de détection qui présente une plus grande sensibilité. Un autre but de l'invention est de proposer un système de détection de neutrons qui est moins coûteux et plus modulable que les systèmes de détection de neutrons connus.

### EXPOSÉ DE L'INVENTION

A cet effet, l'invention a pour objet un système de détection de neutrons du type précité, dans lequel le premier matériau comporte du gadolinium et le deuxième matériau comporte au moins un lanthanide, l'au moins un lanthanide étant distinct du gadolinium.

En effet, l'opération de soustraction entre la transformée du premier signal de détection et la transformée du deuxième signal de détection réduit l'impact, sur la génération de l'information de comptage, de la part des photons X et gamma qui ne sont pas représentatifs de l'absorption d'un neutron par l'écran et qui sont issus de l'ambiance photonique régnant autour des détecteurs. Ceci a pour effet d'améliorer la fiabilité du système de détection.

En outre, cette opération autorise l'observation d'une plus grande plage de fréquences, couvrant en particulier les photons X et gamma, avec un faible risque de fausses détections.

Ceci est rendu possible par le fait que l'élément gadolinium présente la plus grande section efficace d'absorption de neutrons thermiques ou épithermiques, parmi l'ensemble des isotopes stables actuellement répertoriés. En outre, le gadolinium présente une signature X qui est augmentée de l'interaction avec les noyaux de gadolinium sur les traces des rayonnements gamma prompts. Cette signature, autour de 43 keV et 50 keV essentiellement, est la plus significative.

Les autres lanthanides, par exemple le terbium, présentent une section efficace d'absorption de neutrons thermiques ou épithermiques, négligeable devant celle du gadolinium.

En outre, le gadolinium et les autres lanthanides, en particulier les lanthanides présentant un numéro atomique proche de celui du gadolinium, par exemple le terbium, présentent des sections efficaces d'absorption des photons X et gamma (notamment les photos X et gamma constituant l'ambiance photonique régnant autour des détecteurs) qui sont similaires. Le détecteur auxiliaire forme donc un détecteur de référence.

Ainsi, l'opération de soustraction décrite ci-dessus permet-elle bien d'accroître la fiabilité de la mesure.

En outre, du fait de la large plage exploitée, il est possible de recourir à des détecteurs présentant une résolution spectrale plus faible que ceux des détecteurs de l'état de la technique, par exemple des détecteurs à scintillation.

Suivant d'autres aspects avantageux de l'invention, le système de détection de neutrons comporte une ou plusieurs des caractéristiques suivantes, prise(s) isolément ou suivant toutes les combinaisons techniquement possibles :
- au moins un lanthanide du deuxième matériau est du terbium ;
- un élément atténuateur est disposé entre le détecteur principal et le détecteur auxiliaire, l'élément atténuateur étant propre à atténuer un flux, entre le détecteur principal et le détecteur auxiliaire, de photons et/ou d'électrons qui présentent une énergie appartenant à une première plage prédéterminée ;
- le détecteur principal, respectivement le détecteur auxiliaire, comprend, en outre, un diffuseur de photons agencé en périphérie du volume sensible du détecteur principal, respectivement du détecteur auxiliaire ;
- le système de détection comprend un boîtier comportant une paroi définissant un volume interne, la paroi étant réalisée dans un matériau propre à atténuer un flux de photons présentant une énergie appartenant à une deuxième plage prédéterminée, le détecteur principal et le détecteur auxiliaire étant disposés dans le volume interne ;
- le système de détection comprend une enceinte comportant une cloison définissant une cavité, la cloison étant réalisée dans un matériau propre à thermaliser des neutrons rapides, le détecteur principal et le détecteur auxiliaire étant disposés dans la cavité.

En outre, l'invention a pour objet un procédé de détection de neutrons comportant les étapes de :
- fourniture d'un système de détection de neutrons tel que défini ci-dessus ;
- définition d'une pluralité de plages d'énergie ;
- réception, par la chaîne de traitement, du premier signal de détection et du deuxième signal de détection en provenance du détecteur principal et du détecteur auxiliaire respectivement ;
- successivement au cours du temps, au cours d'intervalles temporels de durée prédéterminée :
   - pour le premier signal de détection, et pour chaque plage d'énergie, calcul d'une première valeur intermédiaire représentative d'un nombre de neutrons et/ou de photons qui ont été détectés par le détecteur principal et qui présentent une énergie appartenant à la plage d'énergie ;
   - pour le deuxième signal de détection, et pour chaque plage d'énergie, calcul d'une deuxième valeur intermédiaire représentative d'un nombre de neutrons et/ou de photons qui ont été détectés par le détecteur auxiliaire et qui présentent une énergie appartenant à la plage d'énergie ;
   - calcul, pour chaque plage d'énergie, d'une valeur compensée égale à la différence entre la première valeur intermédiaire et la deuxième valeur intermédiaire ;
   - pour chaque plage d'énergie, calcul d'un seuil d'incertitude ;
   - génération d'un signal de détection de neutrons si, pour au moins un intervalle d'énergie, la valeur compensée associée est supérieure au seuil d'incertitude correspondant.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 est une représentation schématique d'un système de détection de neutrons selon l'invention ; et
- la figure 2 est une représentation schématique d'une chaîne de traitement du système de détection de neutrons de la figure 1.

### EXPOSÉ DÉTAILLÉ DE MODES DE RÉALISATION PARTICULIERS

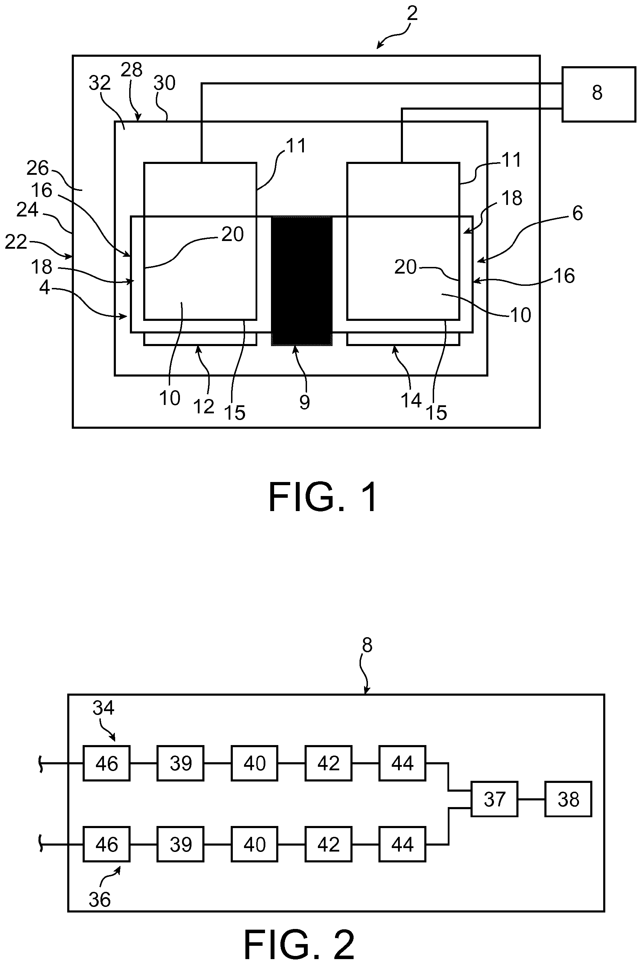

Un système de détection 2 de neutrons selon l'invention est représenté sur la figure 1. Le système de détection 2 est adapté pour générer une information relative à la détection de neutrons, en particulier de neutrons thermiques et/ou épithermiques, dans un volume prédéterminé.

Par « neutron thermique », il est entendu, au sens de la présente invention, un neutron présentant une énergie inférieure ou égale à 10 eV, avantageusement comprise entre 10 meV et 5 eV, par exemple entre 25 meV et 1 eV.

Par « neutron épithermique », il est entendu, au sens de la présente invention, un neutron présentant une énergie inférieure ou égale à 200 keV, et supérieure ou égale à l'énergie d'un neutron thermique.

Le système de détection 2 comporte un détecteur principal 4 et un détecteur auxiliaire 6. Le système de détection 2 comprend, en outre, une chaîne de traitement 8 et un élément atténuateur 9.

Le détecteur principal 4 est configuré pour délivrer en sortie un premier signal de détection. Le détecteur auxiliaire 6 est configuré pour délivrer en sortie un deuxième signal de détection.

La chaîne de traitement 8 est reliée au détecteur principal 4 et au détecteur auxiliaire 6 pour recevoir en entrée le premier signal de détection et le deuxième signal de détection. La chaîne de traitement 8 est configurée pour générer l'information relative à la détection de neutrons à partir du premier signal de détection et du deuxième signal de détection. En particulier, la chaîne de traitement 8 est configurée pour générer l'information relative à la détection de neutrons en fonction de la différence entre une transformée du premier signal de détection et une transformée du deuxième signal de détection.

L'élément atténuateur 9 est disposé entre le détecteur principal 4 et le détecteur auxiliaire 6. L'élément atténuateur 9 est propre à atténuer un flux, entre le détecteur principal 4 et le détecteur auxiliaire 6, de photons et/ou d'électrons qui présentent une énergie appartenant à une première plage prédéterminée.

Par exemple, l'élément atténuateur 9 est réalisé en plomb.

Par exemple, l'épaisseur de l'élément atténuateur 9 est telle que la probabilité, pour un photon ou un électron qui présente une énergie appartenant à la première plage prédéterminée, de traverser l'élément atténuateur 9 soit inférieure ou égale à un seuil prédéterminé. Par exemple, l'épaisseur de l'élément atténuateur 9 est telle que la probabilité, pour un photon ou un électron qui présente une énergie appartenant à la première plage prédéterminée, de traverser l'élément atténuateur 9 soit inférieure ou égale à 0,1.

Le détecteur principal 4 et le détecteur auxiliaire 6 comprennent chacun un volume sensible 10 et un organe de prétraitement 11.

En outre, le détecteur principal 4, respectivement le détecteur auxiliaire 6, comprend un écran de conversion principal 12, respectivement un écran de conversion auxiliaire 14, s'étendant en regard d'une surface d'entrée 15 du volume sensible 10.

Le volume sensible 10 est adapté pour générer un signal de réponse lorsqu'il reçoit des photons et/ou des électrons présentant une énergie appartenant à un intervalle de détection prédéterminé. De préférence, l'intervalle de détection prédéterminé est inclus dans la première plage prédéterminée.

De préférence, le volume sensible 10 du détecteur principal 4 et le volume sensible 10 du détecteur auxiliaire 6 sont similaires.

Par « volumes sensibles similaires », il est entendu au sens de la présente invention que le volume sensible 10 du détecteur principal 4 et le volume sensible 10 du détecteur auxiliaire 6 fournissent en sortie des signaux de réponse présentant les mêmes caractéristiques lorsque la même excitation leur est appliquée en entrée. De telles caractéristiques sont, par exemple, l'amplitude, le niveau de bruit, la puissance totale.

Par exemple, chaque volume sensible 10 est un volume sensible en semi-conducteur, les détecteurs 4, 6 étant alors des détecteurs à semi-conducteur, par exemple des détecteurs à silicium. Le signal de réponse est alors un signal électronique généré par le volume sensible 10 lorsque le volume sensible 10 absorbe des photons et/ou des électrons dont l'énergie appartient à l'intervalle de détection prédéterminé.

Selon un autre exemple, chaque volume sensible 10 est un scintillateur, par exemple un scintillateur plastique, par exemple un scintillateur dopé au bismuth, les détecteurs 4, 6 étant alors des détecteurs à scintillation. Le signal de réponse est alors formé par des photons de luminescence émis par le scintillateur lorsque le scintillateur capte des photons et/ou des électrons dont l'énergie appartient à l'intervalle de détection prédéterminé.

Comme illustré sur la figure 1, le détecteur principal 4 et le détecteur auxiliaire 6 sont disposés à proximité l'un de l'autre, les surfaces d'entrée 15 de leurs volumes sensibles 10 respectifs étant orientées dans la même direction. En variante, les surfaces d'entrée 15 des volumes sensibles 10 respectifs du détecteur principal 4 et du détecteur auxiliaire 6 sont orientées dans des directions différentes, par exemple des directions opposées.

L'organe de prétraitement 11 du détecteur principal 4, respectivement du détecteur auxiliaire 6, est configuré pour générer le premier signal de détection, respectivement le deuxième signal de détection, à partir de signal de réponse délivré par le volume sensible 10 correspondant.

L'organe de prétraitement 11 du détecteur principal 4 et l'organe de prétraitement 11 du détecteur auxiliaire 6 sont avantageusement similaires.

Par « organes de prétraitement similaires », il est entendu au sens de la présente invention que l'organe de prétraitement 11 du détecteur principal 4 et l'organe de prétraitement 11 du détecteur auxiliaire 6 fournissent en sortie des signaux de réponse présentant les mêmes caractéristiques lorsque la même excitation leur est appliquée en entrée. De telles caractéristiques sont, par exemple, l'amplitude, le niveau de bruit, la puissance totale.

Dans le cas où les détecteurs 4, 6 sont des détecteurs à scintillation, l'organe de prétraitement 11 est propre à convertir les photons de scintillation, qui constituent le signal de réponse issu du volume sensible 10, en un signal électronique. De préférence, l'organe de prétraitement 11 est, en outre, propre à amplifier le signal électronique.

L'organe de prétraitement 11 comporte, par exemple, une photocathode pour générer le signal électronique, la photocathode étant associée, par exemple, à un élément d'amplification tel qu'un amplificateur à avalanche ou un pont dynodique.

Dans le cas où les détecteurs 4, 6 sont des détecteurs à semi-conducteur, l'organe de prétraitement 11 est propre à amplifier le signal électronique de réponse issu du volume sensible 10 en semi-conducteur.

L'organe de prétraitement 11 est, par exemple, un préamplificateur de charges.

De façon optionnelle, l'organe de prétraitement 11 comporte également des alimentations basse et/ou haute tension.

L'écran de conversion principal 12 est propre à absorber des neutrons thermiques et/ou épithermiques, et à émettre des photons et/ou des électrons suite à ladite absorption de neutrons thermiques et/ou épithermiques. Par exemple, les photons émis sont des photons gamma prompts, ou encore des photons X. Par exemple, les électrons émis sont des électrons de conversion de conversion interne, ou encore des électrons Auger.

En outre, l'écran de conversion principal 12 est propre à absorber des photons parasites, par exemple des photons X et des photons gamma.

Par « photon parasite », il est entendu un photon qui n'est pas issu de l'interaction d'un neutron avec l'écran de conversion principal 12 ou l'écran de conversion auxiliaire 14, par exemple un photon issu de l'ambiance photonique régnant autour des détecteurs 4, 6.

L'écran de conversion auxiliaire 14 est également propre à absorber des photons parasites. Avantageusement, la capacité de l'écran de conversion auxiliaire 14 à absorber des photons parasites est proche de, de préférence égale à, la capacité de l'écran de conversion principal 12 à absorber les photons parasites.

Toutefois, la capacité de l'écran de conversion auxiliaire 14 à absorber des neutrons thermiques et/ou épithermiques est négligeable devant la capacité de l'écran de conversion principal 12 à absorber des neutrons.

L'écran de conversion principal 12 et l'écran de conversion auxiliaire 14 présentent la même géométrie.

Avantageusement, l'écran de conversion principal 12 et l'écran de conversion auxiliaire 14 recouvrent la totalité de la surface d'entrée 15 du volume sensible 10 du détecteur 4, 6 correspondant.

L'écran de conversion principal 12 est réalisé dans un premier matériau, et l'écran de conversion auxiliaire 14 est réalisé dans un deuxième matériau distinct du premier matériau. Le premier matériau comporte du gadolinium. En outre, le deuxième matériau comporte au moins un lanthanide, l'au moins un lanthanide étant distinct du gadolinium. Ledit au moins un lanthanide présente le numéro atomique le plus proche possible du numéro atomique du gadolinium. De préférence, ledit au moins un lanthanide est le terbium. Selon un autre exemple, ledit au moins un lanthanide est l'europium.

Ainsi, le détecteur principal 4 est propre à générer un premier signal de détection comportant des impulsions chacune représentative de la détection de neutrons, ainsi que des impulsions représentatives de la détection de photons parasites. En outre, le détecteur auxiliaire 6 est propre à générer un deuxième signal de détection comportant majoritairement des impulsions représentatives de la détection de photons parasites.

De préférence, dans le cas où le détecteur principal 4 et le détecteur auxiliaire 6 sont des détecteurs à scintillation, le détecteur principal 4 et le détecteur auxiliaire 6 comprennent chacun un diffuseur de photons 16.

Chaque diffuseur de photons 16 est agencé en périphérie du volume sensible 10 du détecteur 4, 6 correspondant.

Le diffuseur de photons 16 du détecteur principal 4, respectivement du détecteur auxiliaire 6, est configuré pour réfléchir, en direction du volume sensible 10, des photons émis par le scintillateur et dont la direction n'est pas orientée vers le volume sensible 10.

Par exemple, chaque diffuseur de photons 16 est formé par une pellicule 18 agencée en périphérie du volume sensible 10. La pellicule 18 du diffuseur de photons 16 comprend une face interne 20 orientée vers le volume sensible 10. La face interne 20 est recouverte d'un matériau propre à réfléchir des photons de luminescence émis par le scintillateur. Par exemple, la face interne 20 est recouverte de téflon, ou encore de peinture blanche.

Avantageusement, le système de détection 2 comporte également un boîtier 22 comportant une paroi 24. La paroi 24 définit un volume interne 26.

Le détecteur principal 4 et le détecteur auxiliaire 6 sont disposés dans le volume interne 26.

De préférence, la paroi 24 est réalisée dans un matériau propre à atténuer un flux de photons présentant une énergie appartenant à une deuxième plage prédéterminée. La deuxième plage prédéterminée s'étend, par exemple, sur les domaines X et gamma.

Par exemple, la paroi 24 du boîtier 22 est réalisée en acier.

Avantageusement, le système de détection 2 comprend, en outre, une enceinte 28 comportant une cloison 30. La cloison 30 définit une cavité 32.

Le détecteur principal 4 et le détecteur auxiliaire 6 sont disposés dans la cavité 32.

De préférence, la cloison 30 est réalisée dans un matériau propre à thermaliser des neutrons rapides.

Par « neutrons rapides », il est entendu, au sens de la présente invention, des neutrons présentant une énergie supérieure à l'énergie des neutrons épithermiques.

Par exemple, la cloison 30 de l'enceinte 28 est réalisée en polyéthylène.

Dans le cas où le système de détection 2 comporte le boîtier 22 et l'enceinte 28, l'enceinte 28 est disposée dans le volume interne 26 du boîtier 22, la cavité 32 de l'enceinte 28 recevant le détecteur principal 4 et le détecteur auxiliaire 6. En variante, le boîtier 22 est disposée dans la cavité 32 de l'enceinte 28, le volume interne 26 du boîtier 22 recevant le détecteur principal 4 et le détecteur auxiliaire 6.

Comme illustré sur la figure 2, la chaîne de détection 8 comporte une voie principale 34, une voie auxiliaire 36, un organe de traitement 37 et une interface homme-machine 38.

La voie principale 34 et la voie auxiliaire 36 sont configurées pour appliquer une transformée prédéterminée au premier signal de détection et au deuxième signal de détection respectivement.

L'organe de traitement 37 est adapté pour générer une information de comptage de neutrons à partir de la transformée du premier signal de détection et de la transformée du deuxième signal de détection disponibles en sortie de la voie principale 34 et de la voie auxiliaire 36 respectivement.

L'interface homme-machine 38 est propre à permettre à un utilisateur de prendre connaissance de l'information de comptage de neutrons.

Chacune des voies principale 34 et auxiliaire 36 comprend un discriminateur d'impulsion 39, un module d'évaluation d'énergie 40, un comparateur 42 et un compteur incrémental 44 reliés en série.

Le discriminateur d'impulsion 39 est configuré pour distinguer les impulsions présentes dans le signal de détection du bruit du signal de détection. En particulier, le discriminateur d'impulsion 39 est configuré pour distinguer les impulsions du bruit au regard d'un paramètre de niveau prédéterminé. Un tel paramètre de niveau est, par exemple, un seuil en amplitude, aire, durée ou tout autre critère pertinent (fraction constante, par exemple). En variante, le discriminateur d'impulsion 39 est configuré pour discriminer les impulsions du bruit selon un algorithme de déclenchement prédéterminé, une telle méthode étant encore appelée *triggering* en anglais.

Le module d'évaluation d'énergie 40 est configuré pour calculer, pour chaque impulsion détectée par le discriminateur d'impulsion 39, l'énergie associée à l'impulsion détectée.

Par exemple, le module d'évaluation d'énergie 40 est configuré pour calculer l'énergie associée à l'impulsion détectée en multipliant l'amplitude (par exemple exprimée en volts) ou encore l'aire (par exemple exprimée en volts-secondes) de l'impulsion par un coefficient de conversion prédéterminé.

Le comparateur 42 est configuré pour comparer, au cours du temps, l'énergie associée à chaque impulsion aux bornes inférieure et supérieure d'une pluralité de plages d'énergie prédéterminées.

De préférence, les plages d'énergie prédéterminées sont contigües.

Le comparateur 42 est, en outre, configuré pour délivrer, au cours du temps et pour chaque plage d'énergie prédéterminée, un signal d'identification. Le signal d'identification présente deux valeurs possibles : une valeur basse (par exemple nulle) dans le cas de la non détection d'une impulsion dans la plage d'énergie, et une valeur haute, supérieure à la valeur basse, dans le cas de la détection d'une impulsion dans la plage d'énergie.

Le compteur 44 est configuré pour réaliser, au cours d'intervalles de temps successifs de durée prédéterminée, la somme, pour chaque plage d'énergie, des valeurs prises par le signal d'identification au cours de l'intervalle de temps courant.

Le compteur 44 est également propre à générer, en sortie, à l'issue de chacun des intervalles de temps successifs, un signal comportant, pour chaque intervalle, la somme calculée pour l'intervalle.

L'organe de traitement 37 est configuré pour générer une information relative à la détection de neutrons.

En particulier, l'organe de traitement 37 est configuré pour calculer la différence entre le signal délivré en sortie du compteur incrémental 44 de la voie principale 34 et le signal délivré en sortie du compteur incrémental 44 de la voie auxiliaire 36. L'organe de traitement 37 est également configuré pour générer l'information de comptage de neutrons si la différence est supérieure à un seuil qui est, par exemple, fonction du signal délivré en sortie du compteur incrémental 44 de la voie principale 34 et du signal délivré en sortie du compteur incrémental 44 de la voie auxiliaire 36. A titre d'exemple, un tel seuil est égal, pour une plage d'énergie donnée à une quantité proportionnelle à la racine carrée de la somme du signal délivré en sortie du compteur incrémental 44 de la voie principale 34 et du signal délivré en sortie du compteur incrémental 44 de la voie auxiliaire 36.

De façon optionnelle, chaque voie 34, 36 comprend, en outre, un préamplificateur 46 connecté entre le détecteur 4, 6 et le discriminateur d'impulsion 39 correspondant.

Le préamplificateur 46 est configuré pour amplifier les signaux de détection en provenance des détecteurs 4, 6. Une telle amplification a pour effet d'augmenter le rapport signal sur bruit.

En fonctionnement, au cours du temps, chacun des détecteurs principal 4 et auxiliaire 6 génère le premier signal de détection et le deuxième signal de détection respectivement. Chaque signal de détection est représentatif de l'interaction du volume sensible 10 du détecteur 4, 6 correspondant avec des photons parasites et/ou des neutrons.

Le premier signal de détection est acheminé vers la voie principale 24. Le deuxième signal de détection est acheminé vers la voie auxiliaire 26.

Successivement au cours du temps, et pour chaque voie 24, 26, le discriminateur d'impulsion 39 détecte les impulsions présentes dans le signal de détection.

Puis, le module d'évaluation d'énergie 40 calcule, pour chaque impulsion, détectée par le discriminateur d'impulsion 39, l'énergie associée à l'impulsion détectée.

Puis, pour chaque impulsion détectée, le comparateur 42 génère le signal d'identification dans lequel, pour la plage d'énergie à laquelle appartient l'énergie de l'impulsion détectée, le signal d'identification présente la valeur haute et, pour les autres plages d'énergie, le signal d'identification présente la valeur basse, de préférence une valeur nulle.

Puis, le compteur 44 réalise, au cours d'intervalles de temps successifs de durée prédéterminée, la somme, pour chaque plage d'énergie, des valeurs prise par le signal d'identification au cours de l'intervalle de temps courant.

En outre, le compteur 44 est également propre à générer, en sortie, à l'issue de chacun des intervalles de temps successifs, un signal comportant, pour chaque intervalle, la somme calculée pour l'intervalle.

Puis, pour chaque intervalle de temps, l'organe de traitement 37 calcule la différence entre le signal délivré en sortie du compteur incrémental 44 de la voie principale 34 et le signal délivré en sortie du compteur incrémental 44 de la voie auxiliaire 36. L'organe de traitement 37 calcule, en outre, un seuil de détection correspondant.

L'organe de traitement 37 génère l'information de comptage de neutrons si la différence est supérieure au seuil de détection calculé.

L'organe de traitement 37 transmet ensuite l'information de comptage de neutrons à l'interface homme-machine 38 pour consultation par un utilisateur.

Le terbium est le lanthanide qui présente le spectre d'absorption de photons, en particulier de photons X, qui est le plus proche du spectre d'absorption de photons du gadolinium. Donc, la part du deuxième signal de détection qui est due aux photons parasites est similaire à la part du premier signal de détection qui est due aux photons parasites. Par conséquent, du fait du recours au terbium, l'opération de soustraction, encore appelée « compensation », entre le signal délivré en sortie du compteur incrémental 44 de la voie principale 34 et le signal délivré en sortie du compteur incrémental 44 de la voie auxiliaire 36 conduit à une réduction significative de l'impact néfaste des photons parasites sur la fiabilité de l'information de comptage de neutrons.

La présence de l'élément atténuateur 9 entre le détecteur principal 4 et le détecteur auxiliaire 6 a pour effet de réduire le flux de de photons et/ou d'électrons entre le détecteur principal 4 et le détecteur auxiliaire 6. Ainsi, la probabilité de contamination de l'une des voies 34, 36 par des photons et/ou des électrons générés par le volume sensible 10 associé à l'autre des voies 34, 36 est réduite. Ceci a pour effet d'améliorer la fiabilité de l'information de comptage de neutrons.

Le diffuseur de photons 16 est propre à augmenter le nombre de photons qui sont détectés par l'organe de prétraitement à l'issue de l'émission de photons par le volume sensible 10, ce qui a pour effet d'accroître le rapport signal sur bruit des signaux de détection.

Le boîtier 22 accueillant le détecteur principal 4 et le détecteur auxiliaire 6 est propre à atténuer le flux de photons parasites parvenant aux détecteurs 4, 6, ce qui a pour effet d'accroître le rapport signal sur bruit des signaux de détection.

L'enceinte 28 accueillant le détecteur principal 4 et le détecteur auxiliaire 6 est propre à ralentir les neutrons rapides, de sorte que les neutrons ralentis soient des neutrons thermiques et/ou épithermiques propres à être absorbés par les écrans de conversion 12, 14. La présence de l'enceinte 28 a donc pour effet d'accroître la sensibilité du système de détection 2.

## Revendications

1. Système (2) de détection de neutrons comportant un détecteur principal (4) et un détecteur auxiliaire (6),
le détecteur principal (4) et le détecteur auxiliaire (6) comportant chacun un volume sensible (10),
le détecteur principal (4) étant propre à délivrer un premier signal de détection représentatif d'une interaction de son volume sensible (10) avec des photons et/ou des électrons, le détecteur auxiliaire (6) étant propre à délivrer un deuxième signal de détection représentatif d'une interaction de son volume sensible (10) avec des photons et/ou des électrons,
le détecteur principal (4) comprenant, en outre, un écran de conversion principal (12) réalisé dans un premier matériau s'étendant en regard d'une surface d'entrée (15) du volume sensible (10) du détecteur principal (4),
le détecteur auxiliaire (6) comprenant, en outre, un écran de conversion auxiliaire (14) réalisé dans un deuxième matériau s'étendant en regard d'une surface d'entrée (15) du volume sensible (10) du détecteur auxiliaire (6),
le système de détection (2) comprenant en outre une chaîne de traitement (8) configurée pour générer une information de comptage de neutrons en fonction du résultat de la différence entre une transformée du premier signal de détection et une transformée du deuxième signal de détection,
le système de détection (2) étant tel que le premier matériau comporte du gadolinium et étant **caractérisé en ce que** le deuxième matériau comporte au moins un lanthanide, l'au moins un lanthanide étant distinct du gadolinium.

2. Système de détection (2) selon la revendication 1, dans lequel au moins un lanthanide du deuxième matériau est du terbium.

3. Système de détection selon la revendication 1 ou 2, dans lequel un élément atténuateur (9) est disposé entre le détecteur principal (4) et le détecteur auxiliaire (6), l'élément atténuateur (9) étant propre à atténuer un flux, entre le détecteur principal (4) et le détecteur auxiliaire (6), de photons et/ou d'électrons qui présentent une énergie appartenant à une première plage prédéterminée.

4. Système de détection (2) selon l'une quelconque des revendications 1 à 3, dans lequel le détecteur principal (4), respectivement le détecteur auxiliaire (4), comprend, en outre, un diffuseur de photons (16) agencé en périphérie du volume sensible (10) du détecteur principal (4), respectivement du détecteur auxiliaire (6).

5. Système de détection (2) selon l'une quelconque des revendications 1 à 4, comprenant un boîtier (22) comportant une paroi (24) définissant un volume interne (26), la paroi (24) étant réalisée dans un matériau propre à atténuer un flux de photons présentant une énergie appartenant à une deuxième plage prédéterminée, le détecteur principal (4) et le détecteur auxiliaire (6) étant disposés dans le volume interne (26).

6. Système de détection selon l'une quelconque des revendications 1 à 5, comprenant une enceinte (28) comportant une cloison (30) définissant une cavité (32), la cloison (30) étant réalisée dans un matériau propre à thermaliser des neutrons rapides, le détecteur principal (4) et le détecteur auxiliaire (6) étant disposés dans la cavité (32).

7. Procédé de détection de neutrons comportant les étapes de :
- fourniture d'un système (2) de détection de neutrons selon l'une quelconque des revendications 1 à 6 ;
- définition d'une pluralité de plages d'énergie ;
- réception, par la chaîne de traitement (8), du premier signal de détection et du deuxième signal de détection en provenance du détecteur principal (4) et du détecteur auxiliaire (6) respectivement ;
- successivement au cours du temps, au cours d'intervalles temporels de durée prédéterminée :
- pour le premier signal de détection, et pour chaque plage d'énergie, calcul d'une première valeur intermédiaire représentative d'un nombre de neutrons et/ou de photons qui ont été détectés par le détecteur principal (4) et qui présentent une énergie appartenant à la plage d'énergie ;
- pour le deuxième signal de détection, et pour chaque plage d'énergie, calcul d'une deuxième valeur intermédiaire représentative d'un nombre de neutrons et/ou de photons qui ont été détectés par le détecteur auxiliaire et qui présentent une énergie appartenant à la plage d'énergie ;
- calcul, pour chaque plage d'énergie, d'une valeur compensée égale à la différence entre la première valeur intermédiaire et la deuxième valeur intermédiaire ;
- pour chaque plage d'énergie, calcul d'un seuil d'incertitude ;
- génération d'un signal de détection de neutrons si, pour au moins un intervalle d'énergie, la valeur compensée associée est supérieure au seuil d'incertitude correspondant.

## Patentansprüche

1. System (2) zur Detektion von Neutronen, umfassend einen Hauptdetektor (4) und einen Hilfsdetektor (6),
wobei der Hauptdetektor (4) und der Hilfsdetektor (6) jeweils ein empfindliches Volumen (10) umfassen,
wobei der Hauptdetektor (4) dazu ausgelegt ist, ein erstes Detektionssignal zu liefern, das repräsentativ ist für eine Wechselwirkung seines empfindlichen Volumens (10) mit Photonen und/oder Elektronen, wobei der Hilfsdetektor (6) dazu ausgelegt ist, ein zweites Detektionssignal zu liefern, das repräsentativ ist für eine Wechselwirkung seines empfindlichen Volumens (10) mit Photonen und/oder Elektronen,
wobei der Hauptdetektor (4) ferner einen Hauptkonversionsschirm (12) umfasst, der aus einem ersten Material hergestellt ist, der sich gegenüber einer Eingangsoberfläche (15) des empfindlichen Volumens (10) des Hauptdetektors (4) erstreckt,
wobei der Hilfsdetektor (6) ferner einen Hilfskonversionsschirm (14) umfasst, der aus einem zweiten Material hergestellt ist, der sich gegenüber einer Eingangsoberfläche (15) des empfindlichen Volumens (10) des Hilfsdetektors (6) erstreckt,
wobei das Detektionssystem (2) ferner eine Verarbeitungskette (8) umfasst, die dazu konfiguriert ist, eine Neutronenzählinformation als Funktion des Ergebnisses der Differenz zwischen einer Transformierten des ersten Detektionssignals und einer Transformierten des zweiten Detektionssignals zu generieren,
wobei das Detektionssystem (2) derart ist, dass das erste Material Gadolinium umfasst, und **dadurch gekennzeichnet ist, dass** das zweite Material wenigstens ein Lanthanid umfasst, wobei das wenigstens eine Lanthanid von Gadolinium verschieden ist.

2. Detektionssystem (2) nach Anspruch 1, bei dem wenigstens ein Lanthanid des zweiten Materials Terbium ist.

3. Detektionssystem nach Anspruch 1 oder 2, bei dem ein Abschwächungselement (9) zwischen dem Hauptdetektor (4) und dem Hilfsdetektor (6) angeordnet ist, wobei das Abschächungselement (9) dazu ausgelegt ist, einen Fluss von Photonen und/oder von Elektronen, die eine Energie aufweisen, die zu einem ersten vorbestimmten Bereich gehört, zwischen dem Hauptdetektor (4) und dem Hilfsdetektor (6) abzuschwächen.

4. Detektionssystem (2) nach einem der Ansprüche 1 bis 3, bei dem der Hauptdetektor (4) beziehungsweise der Hilfsdetektor (4) ferner einen Photonendiffusor (16) umfasst, der am Umfang des empfindlichen Volumens (10) des Hauptdetektors (4) beziehungsweise des Hilfsdetektors (6) angeordnet ist.

5. Detektionssystem (2) nach einem der Ansprüche 1 bis 4, umfassend ein Gehäuse (22), das eine Wand (24) umfasst, die ein Innenvolumen (26) definiert, wobei die Wand (24) aus einem Material hergestellt ist, das dazu ausgelegt ist, einen Fluss von Photonen abzuschwächen, die eine Energie aufweisen, die zu einem zweiten vorbestimmten Bereich gehört, wobei der Hauptdetektor (4) und der Hilfsdetektor (6) in dem Innenvolumen (26) angeordnet sind.

6. Detektionssystem nach einem der Ansprüche 1 bis 5, umfassend einen Behälter (28), der eine Trennwand (30) umfasst, die einen Hohlraum (32) definiert, wobei die Trennwand (30) aus einem Material hergestellt ist, das dazu ausgelegt ist, schnelle Neutronen zu thermalisieren, wobei der Hauptdetektor (4) und der Hilfsdetektor (6) in dem Hohlraum (32) angeordnet sind.

7. Verfahren zur Detektion von Neutronen, umfassend die folgenden Schritte:
- Bereitstellen eines Systems (2) zur Detektion von Neutronen nach einem der Ansprüche 1 bis 6;
- Definieren einer Mehrzahl von Energiebereichen;
- Empfangen, durch die Verarbeitungskette (8), des ersten Detektionssignals und des zweiten Detektionssignals, die von dem Hauptdetektor (4) beziehungsweise von dem Hilfsdetektor (6) stammen;
- sukzessive im Verlauf der Zeit im Verlauf von Zeitintervallen mit vorbestimmter Dauer:
- für das erste Detektionssignal, und für jeden Energiebereich, Berechnen eines ersten Zwischenwerts, der repräsentativ ist für eine Zahl von Neutronen und/oder von Photonen, die durch den Hauptdetektor (4) detektiert worden sind und die eine Energie aufweisen, die zu dem Energiebereich gehört;
- für das zweite Detektionssignal, und für jeden Energiebereich, Berechnen eines zweiten Zwischenwerts, der repräsentativ ist für eine Zahl von Neutronen und/oder von Photonen, die durch den Hilfsdetektor detektiert worden sind, und die eine Energie aufweisen, die zu dem Energiebereich gehört;
- Berechnen, für jeden Energiebereich, eines kompensierten Werts gleich der Differenz zwischen dem ersten Zwischenwert und dem zweiten Zwischenwert;
- für jeden Energiebereich, Berechnen einer Unsicherheitsschwelle;
- Generieren eines Neutronendetektionssignals, wenn für wenigstens ein Energieintervall der zugeordnete kompensierte Wert größer ist als die entsprechende Unsicherheitsschwelle.

## Claims

1. A system (2) for detecting neutrons including a main detector (4) and an auxiliary detector (6),
the main detector (4) and the auxiliary detector (6) each including a sensitive volume (10),
the main detector (4) being capable of delivering a first detection signal representative of an interaction of its sensitive volume (10) with photons and/or electrons, the auxiliary detector (6) being capable of delivering a second detection signal representative of an interaction of its sensitive volume (10) with photons and/or electrons,
the main detector (4) further comprising a main conversion screen (12) made of a first material extending opposite an entrance surface (15) of the sensitive volume (10) of the main detector (4),
the auxiliary detector (6) further comprising an auxiliary conversion screen (14) made of a second material extending opposite an entrance surface (15) of the sensitive volume (10) of the auxiliary detector (6),
the detection system (2) further comprising a processing chain (8) configured to generate a neutron count information depending on the result of the difference between a transform of the first detection signal and a transform of the second detection signal,
the detection system (2) being such that the first material includes gadolinium and being **characterised in that** the second material includes at least one lanthanide, the at least one lanthanide being distinct from gadolinium.

2. The detection system (2) according to claim 1, wherein at least one lanthanide of the second material is terbium.

3. The detection system according to claim 1 or 2, wherein an attenuating element (9) is arranged between the main detector (4) and the auxiliary detector (6), the attenuating element (9) being capable of attenuating a flux, between the main detector (4) and the auxiliary detector (6), of photons and/or electrons which have an energy falling within a first predetermined range.

4. The detection system (2) according to anyone of claims 1 to 3, wherein the main detector (4), respectively the auxiliary detector (4), further comprises a photon diffuser (16) arranged in the periphery of the sensitive volume (10) of the main detector (4), respectively of the auxiliary detector (6).

5. The detection system (2) according to any one of claims 1 to 4, comprising a case (22) including a wall (24) defining an internal volume (26), the wall (24) being made of a material capable of attenuating a photon flux having an energy falling within a second predetermined range, the main detector (4) and the auxiliary detector (6) being disposed in the internal volume (26).

6. The detection system according to any one of claims 1 to 5, comprising an enclosure (28) including a partition (30) defining a cavity (32), the partition (30) being made of a material capable of thermalizing fast neutrons, the main detector (4) and the auxiliary detector (6) being disposed in the cavity (32).

7. A method for detecting neutrons including the steps of:
- providing a neutron detection system (2) according to any one of claims 1 to 6;
- defining a plurality of energy ranges;
- receiving, by the processing chain (8), the first detection signal and the second detection signal from the main detector (4) and the auxiliary detector (6) respectively;
- successively overtime, during time intervals of predetermined duration:
- for the first detection signal, and for each energy range, calculating a first intermediate value representative of a number of neutrons and/or photons which have been detected by the main detector (4) and which have an energy falling within the energy range;
- for the second detection signal, and for each energy range, calculating a second intermediate value representative of a number of neutrons and/or photons which have been detected by the auxiliary detector and which have an energy falling within the energy range;
- calculating, for each energy range, a compensated value equal to the difference between the first intermediate value and the second intermediate value;
- for each energy range, calculating an uncertainty threshold;
- generating a neutron detection signal if, for at least one energy interval, the associated compensated value is greater than the corresponding uncertainty threshold.
